# EUROPÄISCHE PATENTANMELDUNG

(11) **EP 0 906 855 A2**
(43) Veröffentlichungstag der Anmeldung: **07.04.1999**
(21) Anmeldenummer: 98118563.0
(22) Anmeldetag: 01.10.1998
(51) Int. Cl.: B60T 1/06, F16D 65/12

(54) **Anordnung zum drehbaren Halten einer Felge und einer Bremsscheibe an einem Achsstummel**

(30) Priorität: 01.10.1997 DE 19743539
(71) Anmelder: WABCO Perrot Bremsen GmbH, 68229 Mannheim (DE)
(72) Erfinder: Macke, Wlodzimierz Dipl.-Ing., 68542 Heddesheim (DE); Jäger, Hellmut Dipl.-Ing., 67067 Ludwigshafen (DE); Antony, Paul Dipl.-Ing., 67550 Worms (DE)
(74) Vertreter: Patentanwälte Leinweber & Zimmermann

(57) **Zusammenfassung**

Die Erfindung betrifft eine Anordnung zum drehbaren Halten einer Felge (6) und einer Bremsscheibe (3) an einem Achsstummel (1), wobei die Felge und die Bremsscheibe zur gemeinsamen Drehung miteinander gekoppelt sind.

Erfindungsgemäß ist vorgesehen, daß
die Bremsscheibe drehbar auf dem Achsstummel gelagert ist und die Felge an der Bremsscheibe befestigt ist
   bzw.
die Felge drehbar auf dem Achsstummel gelagert ist und die Bremsscheibe an der Felge befestigt ist.

## Beschreibung

Die Erfindung betrifft eine Anordnung zum drehbaren Halten einer Felge und einer Bremsscheibe an einem Achsstummel, wobei die Felge und die Bremsscheibe zur gemeinsamen Drehung miteinander gekoppelt sind.

Derartige Halteanordnungen sind bekannt. Als Beispiel werden genannt die EP-A-7O3 13O und die DE-A 44 33 743. Ferner wird die DE-U-297 O1 826 der Anmelderin genannt, auf deren Offenbarung ausdrücklich bezug genommen wird.

Alle die bekannten Halteanordnungen sehen eine Nabe vor, die drehbar auf dem Achsstummel gelagert ist. Das Vorsehen einer solchen Nabe macht den Gesamtaufbau der Halteanordnung kompliziert. Darüber hinaus muß in den meisten Fällen die Nabe zum Montieren/Demontieren der Bremsscheibe abgenommen werden, was als nachteilig empfunden wird. Ferner erhöht die Nabe - insbesondere bei größeren Bremsen - das Gesamtgewicht. Schließlich nimmt die Nabe einen erheblichen Teil des ohnehin sehr begrenzten Raumes im Bremsenbereich ein.

Der Erfindung liegt die Aufgabe zugrunde, die Halteanordnung der eingangs genannten Art derart weiterzubilden, daß ein schnellerer und einfacherer Wechsel der Bremsscheibe möglich ist. Ferner soll der Zugang zur gesamten Scheibenbremse verbessert werden. Darüber hinaus soll die Anzahl der Teile reduziert werden. Schließlich werden eine Gewichtsreduzierung und eine bessere Ausnutzung des Bauraumangebots angestrebt. Dadurch kann der Bauraum zur Optimierung der Bremsendimensionierung besser genutzt werden.

Erfindungsgemäß wird die gestellte Aufgabe dadurch gelöst, daß die Bremsscheibe drehbar auf dem Achsstummel gelagert ist und die Felge an der Bremsscheibe befestigt ist.

Erfindungsgemäß kann aber auch zur Lösung der gestellten Aufgabe vorgesehen sein, daß die Felge drehbar auf dem Achsstummel gelagert ist und die Bremsscheibe an der Felge befestigt ist.

Mit anderen Worten sieht die Erfindung vor, daß die herkömmlicherweise drehbar auf dem Achsstummel gelagerte Nabe entfällt und stattdessen die Bremsscheibe bzw. die Felge selbst drehbar auf dem Achsstummel gelagert ist, während die Felge bzw. die Bremsscheibe, die herkömmlicherweise an der Nabe befestigt worden sind, nunmehr an der drehbar gelagerten Bremsscheibe bzw. Felge befestigt wird.

Durch den Wegfall der Nabe ist ein einfacher Zugang zur Scheibenbremse, beispielsweise zum Wechseln der Bremsscheibe gegeben, weil ja die Nabe nicht mehr ausgebaut werden muß. Ferner führt der Wegfall der Nabe zu einer entsprechenden Reduzierung der Teilezahl. Auch wird die Bremse um das Gewicht der weggefallenen Nabe und etwaig dafür vorgesehener Verbindungselemente leichter. Darüber hinaus kann der herkömmlicherweise von der Nabe eingenommene Bauraum anderweitig genutzt werden, was insbesondere der Optimierung der Bremsendimensionierung zugute kommt. Schließlich wird die Fertigung vereinfacht. Es ergibt sich mithin eine kostenoptimierte Ausführung der Bremse.

Bevorzugt ist die Felge unmittelbar an der Bremsscheibe befestigt. Mit anderen Worten liegt die Felge mit mindestens einer Fläche an einer entsprechenden Fläche der Bremsscheibe an, ohne daß irgendwelche Elemente dazwischen lägen.

Weiter bevorzugt ist es erfindungsgemäß, mindestens ein zum Achsstummel exzentrisches Koppelelement zum Befestigen der Felge an der Bremsscheibe vorzusehen. Durch die Exzentrizität wird die angestrebte Drehkopplung zwischen Felge und Bremsscheibe unterstützt bzw. erzielt.

Ist die Bremsscheibe drehbar auf dem Achsstummel gelagert und ist die Felge an der Bremsscheibe befestigt, so ist es erfindungsgemäß besonders bevorzugt, daß die Bremsscheibe einen Ansatz aufweist, der sich durch eine Durchgangsöffnung in der Felge hindurch erstreckt, und daß ein ein Gewinde tragendes Element zum die Felge an der Bremsscheibe befestigenden Verschrauben mit dem freien Ende des Ansatzes vorgesehen ist.

Auf diese Weise kann mit vorzugsweise nur einer einzigen Verschraubung zur Befestigung sowohl der Bremsscheibe als auch der Felge ausgekommen werden. Selbstverständlich reduziert sich dadurch weiter der Aufwand zur Montage/Demontage der Bremsscheibe.

Erfindungsgemäß kann vorgesehen sein, daß der Ansatz rohrförmig ist und die Durchgangsöffnung in der Mitte der Felge liegt, wobei der Ansatz und die Durchgangsöffnung eine von der Rotationssymmetrie abweichende Kontur haben.

Auf diese Weise - beispielsweise im Falle nur einer einzigen Verschraubung zur Befestigung der Felge an der Bremsscheibe - ist eine Drehkopplung der Bremsscheibe mit der Felge durch formschlüssige Verbindung sichergestellt. Darüber hinaus führt das Schraubverbinden von Felge und Bremsscheibe aber auch zu einem gewissen Reibschluß, wodurch der Aufwand für den Formschluß minimiert werden kann.

Bei derjenigen erfindungsgemäßen Lösung, nach der die Felge drehbar auf dem Achsstummel gelagert ist und die Bremsscheibe an der Felge befestigt ist, ist es - wie bei der anderen Lösung auch - erfindungsgemäß bevorzugt, daß die Felge unmittelbar an der Bremsscheibe befestigt ist.

Im übrigen wird eine Kopplung bevorzugt, wie sie in der bereits erwähnten DE-U-297 O1 826 beschrieben ist. Insofern wird ausdrücklich auf die dortige Offenbarung bezug genommen.

Demnach ist es erfindungsgemäß bevorzugt vorgesehen, daß die Bremsscheibe mindestens ein erstes Koppelelement trägt, das sich durch eine Durchgangsöffnung in der Felge erstreckt, das Koppelelement ein zu dem Achsstummel konzentrisches Gewindesegment trägt und ein zweites Koppelelement mit einem dem Gewindesegment komplementären Gewinde vorgesehen ist, das zum die Bremsscheibe an der Felge befestigenden Verschrauben mit dem Ende des ersten Koppelelements ausgelegt ist.

Dabei kann das erste Koppelelement von einem einstückig mit der Bremsscheibe ausgeführten Koppelansatz gebildet sein. Die Gesamtanzahl der Teile wird dadurch weiter reduziert.

Ferner kann erfindungsgemäß das Gewinde des zweiten Koppelelements in aufgeschraubtem Zustand an drei Punkten mit Gewindesegment in Kontakt stehen, die auf einem Kreis um den Achsstummel einen Winkel von mehr als 18O° einschließen. Bei dieser Konstruktion halten das oder die Gewindesegment(e) und das zweite Koppelelement einander gegenseitig. Es wird ausdrücklich darauf hingewiesen, daß insbesondere diese Ausgestaltung sowohl ein einziges Gewindesegment, das sich über mehr als 18O° erstreckt, als auch zwei oder mehr Gewindesegmente beinhaltet, die sich zusammen - mit Unterbrechungen - über mehr als 18O° erstrecken.

Bei beiden erfindungsgemäßen Lösungen dient bevorzugt mindestens eine Schraube zum Befestigen der Felge an der Bremsscheibe bzw. der Bremsscheibe an der Felge.

Dabei kann ein Flanschdeckel zwischen dem Kopf der Schraube und der Bremsscheibe bzw. der Felge vorgesehen sein.

Im folgenden ist die Erfindung anhand verschiedener Ausführungsbeispiele unter Bezugnahme auf die beiliegende Zeichnung mit weiteren Einzelheiten näher erläutert. Dabei zeigen
Fig.1 eine Ausgestaltung der Erfindung an einer nicht angetriebenen Achse,
Fig. 2 eine Ausgestaltung der Erfindung an einer angetriebenen Achse,
Fig. 3 eine Ausführung mit Distanzstücken im Arretierungsbereich von zwei Radfelgen,
Fig. 4 eine Ausführung des Drehschlusses zwischen Bremsscheibe und Radfelge,
Fig. 5 eine weitere Ausführungsform der Erfindung und
Fig. 6 die Ausführung nach Fig. 5, jedoch mit mehr als einer Verschraubung.

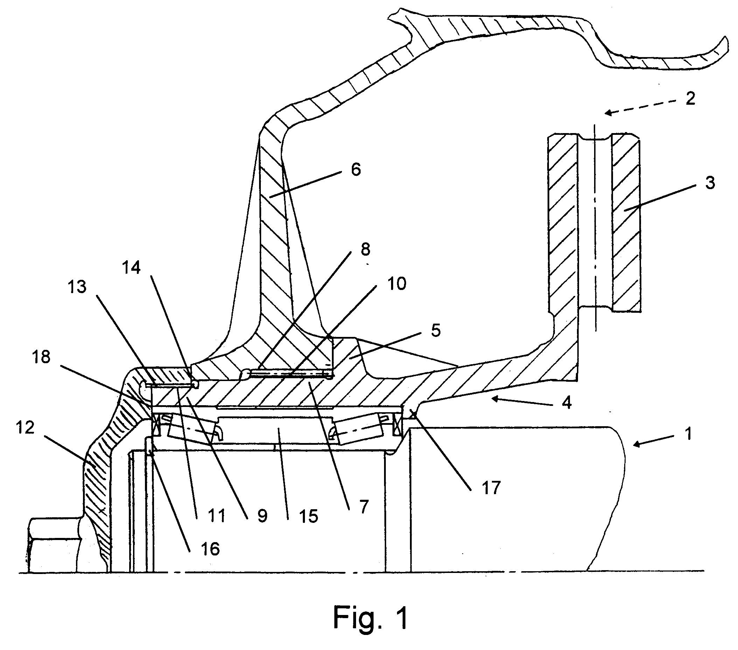

Gemäß Fig. 1 ist im Bereich eines Achsstummels 1 eine Scheibenbremse 2 (nicht komplett gezeigt) einschließlich Scheibenbremsenhalterung angeordnet, die mit zwei Sattelschenkeln (nicht gezeigt) eine Bremsscheibe 3 übergreift. Die Bremsscheibe 3 erstreckt sich in Richtung Achsstummel mit einem rohrförmigen Ansatz 4, von dem sich ein Scheibenflansch 5 erstreckt. An dem Scheibenflansch 5 liegt eine Felge 6 mit einem (nicht gezeigten) Reifen an. Der rohrförmige Ansatz 4 erstreckt sich dann weiter zum Endabschnitt, wobei ein erster Bereich 7 mindestens eine Durchgangsöffnung 8 der Felge 6 derart durchdringt, daß andererseits von der Felge 6 ein zweiter Bereich 9 des rohrförmigen Ansatzes 4 der Bremsscheibe 3 übersteht. Dabei dient der erste Bereich 7 der Zentrierung der Felge 6. Zwischen diesen beiden Teilen ist in diesem Bereich eine Drehkopplung 10 durch Kraftschluß, Formschluß oder Kraft- und Formschluß vorhanden. Die axial lösbare Drehverbindung 10 kann durch eine Klauenverbindung, eine komplementäre Profilierung, eine Axialverzahnung usw. realisiert sein. Der zweite Bereich 9 weist ein Gewinde 11 auf, das hier als Außengewinde dargestellt ist. Auf dieses Gewinde 11 wird eine Zentralverschraubung 12 mit einem komplementären Gewinde 13 geschraubt, das in diesem Fall ein Innengewinde ist. Die Zentralverschraubung 12 drückt mit einer Stirnfläche 14 gegen die Felge 6 und legt diese damit in Axialrichtung gegen den Scheibenflansch 5 fest.

Damit trägt die Bremsscheibe 3 die Felge 6 direkt ohne die bisher übliche Habe. Durch die Verwendung nur einer Zentralverschraubung können die bisherigen vielen Schraubverbindungen, insbesondere die Löcher in der Radfelge mit den Radmuttern, entfallen, und der durch den Wegfall der Nabe gewonnene Platz kann für anderweitige Maßnahmen ausgenutzt werden. Die Drehkopplung 1O erlaubt es im Zusammenspiel mit der Zentralverschraubung 12, daß die Felge 6 in sehr einfacher Weise an der Bremsscheibe 3 angebracht bzw. davon gelöst werden kann.

Zur Drehlagerung der Bremsscheibe 3 auf dem Achsstummel 1 dient eine Lagerung 15. Zur axialen Halterung der Lagerung 15 an dem Achsstummel 1 einerseits sowie der Bremsscheibe 3 gegenüber der Lagerung 15 andererseits dienen eine Axialsicherung 16, ein Axialansatz 18 an der Zentralverschraubung 12 und ein Axialansatz 17 an der Bremsscheibe 3.

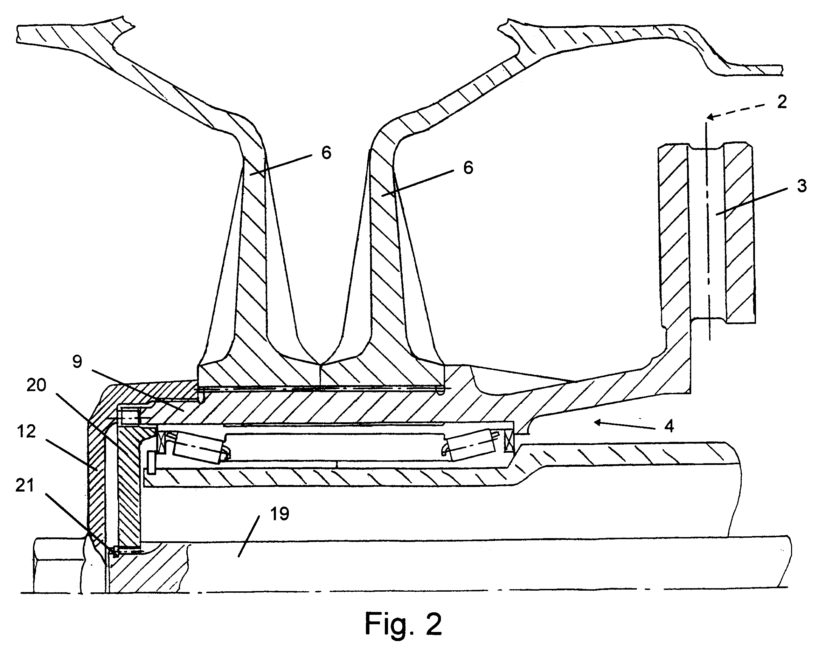

Fig. 2 zeigt die gleiche Ausführung wie Fig. 1, jedoch bei einer angetriebenen Achse. Ein weiterer Unterschied liegt darin, daß zwei Radfelgen 6 und deren Lagerung auf der Bremsscheibe dargestellt sind. Der Einfachheit halber sind nur die sich auf den Antrieb beziehenden Bezugszeichen eingetragen.

Zwischen einem Antriebsstrang 19 und dem zweiten Bereich 9 des rohrförmigen Ansatzes 4 der Bremsscheibe 3 ist ein Drehmomentübertragungsteil 20 angeordnet, welches den Antriebsstrang 19 mit der Bremsscheibe 3 drehfest koppelt, jedoch in Axialrichtung aus dem Krafteingriff getrennt werden kann. Zur Sicherung dient einerseits eine Axialsicherung 21 gegenüber dem Antriebsstrang 19. Gegenüber der Bremsscheibe 3 kann die Sicherung durch die Zentralverschraubung 12 erfolgen.

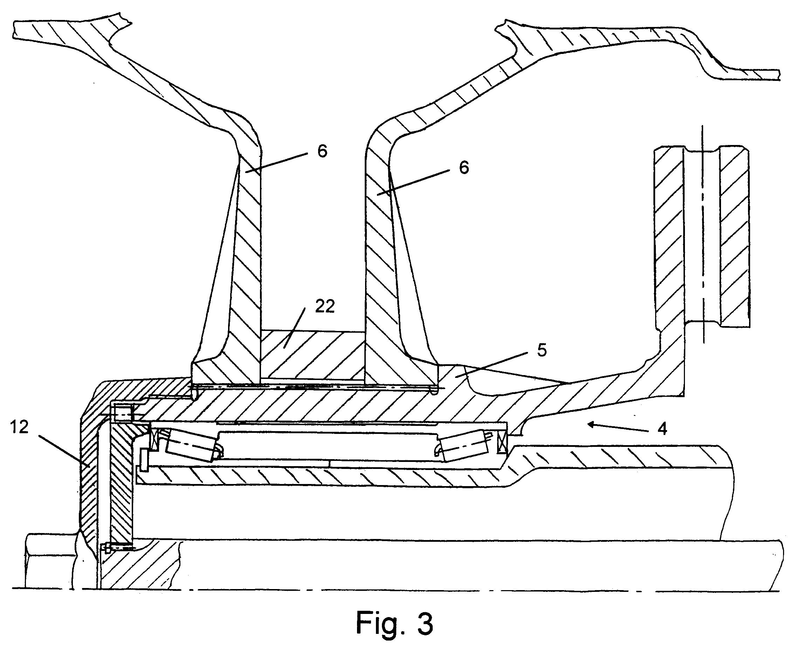

Das Ausführungsbeispiel nach Fig. 3 unterscheidet sich von demjenigen nach Fig. 2 nur dadurch, daß zur axialen Arretierung der Radfelgen 6 zwischen dem Scheibenflansch 5 und der Zentralverschraubung 12 mindestens eine Abstandshülse 22 angeordnet ist, die dazu dient, mehrere Radfelgen zueinander auf Abstand zu halten bzw. exakt zu positionieren.

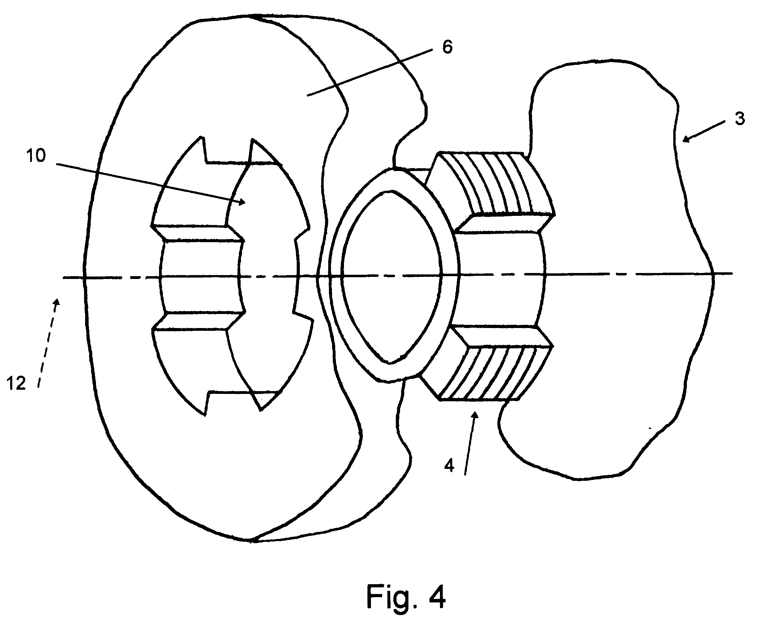

Fig. 4 zeigt einen Teil einer Felge 6 und den rohrförmigen Bereich 4 der Bremsscheibe 3 mit der Drehkopplung 1O. Die Drehkopplung 1O ist in diesem Ausführungsbeispiel durch eine Klauen-Gewindeverbindung zur Dreh- und Axialkopplung durch die Zentralverschraubung 12 realisiert.

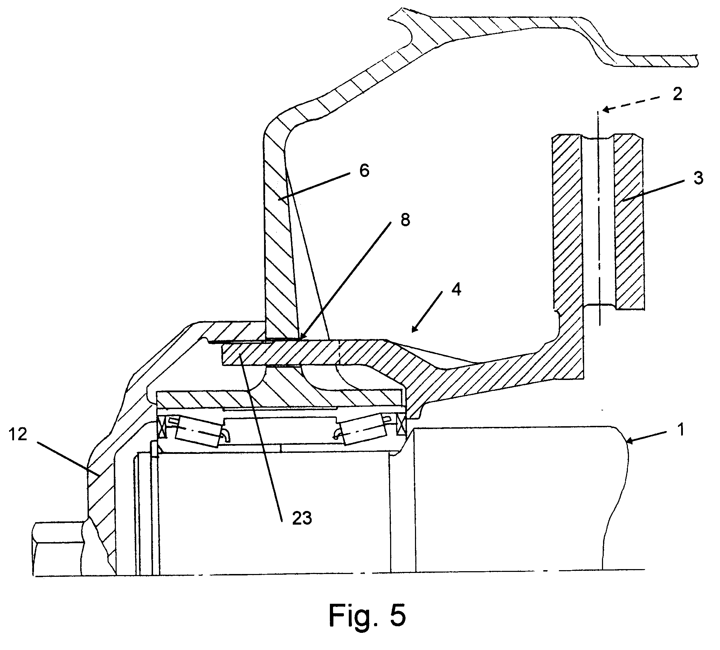

Fig. 5 zeigt eine zu Fig. 1 komplementäre Ausführungsform. Bereits beschriebene Elemente werden zur Vermeidung von Wiederholungen nicht erneut beschrieben. Bei dieser Ausführungsform ist die Felge 6 - in gleicher Weise wie nach Fig. 1 die Bremsscheibe 3 - auf dem Achsstummel 1 gelagert und gehaltert. Um die Bremsscheibe 3 an der sie tragenden Felge 6 zu befestigen, erstrecken sich klauenartige Gewindeansätze 23 vom rohrförmigen Bereich 4 der Bremsscheibe 3 durch Durchgangsöffnungen 8 der Felge 6. Sie werden von der anderen Seite mittels der Zentralverschraubung in bereits beschriebener Weise verspannt.

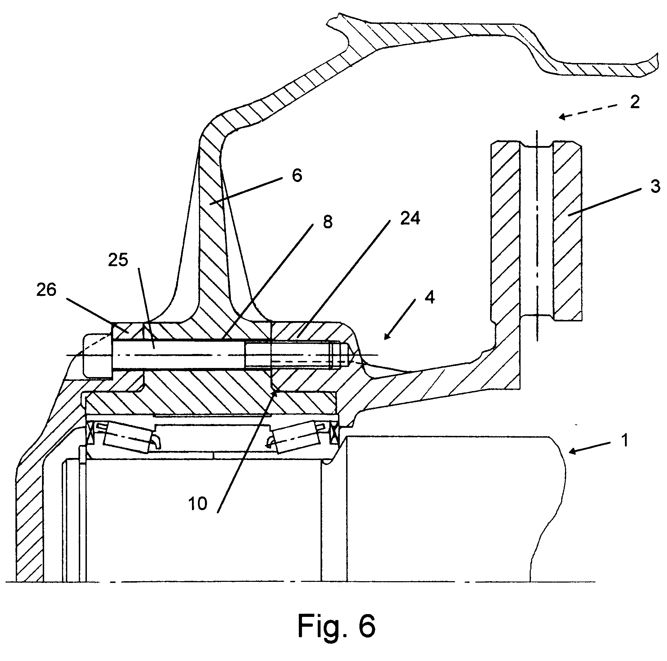

Fig. 6 zeigt ebenfalls eine als Trageteil für die Bremsscheibe 3 dienende Felge 6 auf dem Achsstummel 1 mit Durchgangsöffnungen 8. Dabei ist allerdings der Bereich 4 der Bremsscheibe 3 mit mehreren Gewindelöchern 24 versehen. Die Verspannung erfolgt mit Schrauben 25. Auch hierbei ist zwischen der Bremsscheibe 3 und der Felge 6 eine bereits oben erwähnte Drehkopplung 1O (Formschluß) vorhanden. Dadurch werden die Verbindungsschrauben 25 von Umfangskräften entlastet. Der besseren Verspannung einerseits und der Abdichtung des Achsstummels 1 andererseits dient ein Flanschdeckel 26, der zwischen der Felge 6 und den Verbindungsschrauben 25 sitzt. Es sei darauf hingewiesen, daß es sich bei den Schrauben 25 nicht um die herkömmlichen Radmuttern handelt, die nach dem Stand der Technik die Radfelge und die Nabe koppeln, sondern um Schrauben zwischen der Felge 6 und der Bremsscheibe 3.

Selbstverständlich können auch bei den Ausführungsbeispielen nach den Figuren 1 bis 3, also bei der Lagerung der Bremsscheibe 3 auf dem Achsstummel 1 Schrauben zur Befestigung der Felge 6 an der Bremsscheibe 3 verwendet werden.

Wie die Figuren zeigen, kann nach Entfernung der Zentralverschraubung 12 bzw. der Verbindungsschrauben 25 eine sofortige Trennung zwischen der Felge 6 und der Bremsscheibe 3 erfolgen. Ein freier Zugang zur Wartung der Bremsenteile ist damit auf einfache Weise gegeben. Je nach Ausführung der Scheibenbremse und deren Halterung ist nach deren Entfernen die Bremsscheibe sehr einfach und schnell vom Achsstummel 1 abzuziehen.

Die in der vorstehenden Beschreibung, den Ansprüchen sowie der Zeichnung offenbarten Merkmale können sowohl einzeln als auch in beliebigen Kombinationen für die Verwirklichung der Erfindung in ihren verschiedenen Ausführungsformen wesentlich sein.

## Patentansprüche

1. Anordnung zum drehbaren Halten einer Felge (6) und einer Bremsscheibe (3) an einem Achsstummel (1), wobei die Felge (6) und die Bremsscheibe (3) zur gemeinsamen Drehung miteinander gekoppelt sind,
dadurch gekennzeichnet, daß
die Bremsscheibe (3) drehbar auf dem Achsstummel (1) gelagert ist und die Felge (6) an der Bremsscheibe (3) befestigt ist.

2. Anordnung nach Anspruch 1, dadurch gekennzeichnet, daß die Felge (6) unmittelbar an der Bremsscheibe befestigt ist.

3. Anordnung nach Anspruch 1 oder 2, gekennzeichnet durch mindestens ein zum Achsstummel (1) exzentrisches Koppelelement zum Befestigen der Felge (6) an der Bremsscheibe (3).

4. Anordnung nach einem der vorangehenden Ansprüche, dadurch gekennzeichnet, daß die Bremsscheibe (3) einen Ansatz (9) aufweist, der sich durch eine Durchgangsöffnung (8) in der Felge (6) hindurch erstreckt, und ein ein Gewinde (13) tragendes Element (12) zum die Felge (6) an der Bremsscheibe (3) befestigenden Verschrauben mit dem freien Ende des Ansatzes (9) vorgesehen ist.

5. Anordnung nach Anspruch 4, dadurch gekennzeichnet, daß der Ansatz (9) rohrförmig ist und die Durchgangsöffnung (8) in der Mitte der Felge (6) liegt, wobei der Ansatz (9) und die Durchgangsöffnung (8) jeweils eine von der Rotationssymmetrie abweichende Kontur haben.

6. Anordnung zum drehbaren Halten einer Felge (6) und einer Bremsscheibe (3) an einem Achsstummel (1), wobei die Felge (6) und die Bremsscheibe (3) zur gemeinsamen Drehung miteinander gekoppelt sind,
dadurch gekennzeichnet, daß
die Felge (6) drehbar auf dem Achsstummel (1) gelagert ist, und die Bremsscheibe (3) an der Felge (6) befestigt ist.

7. Anordnung nach Anspruch 6, dadurch gekennzeichnet, daß die Bremsscheibe (3) unmittelbar an der Felge (6) befestigt ist.

8. Anordnung nach Anspruch 6 oder 7, dadurch gekennzeichnet, daß die Bremsscheibe (3) mindestens ein erstes Koppelelement (23) trägt, das sich durch eine Durchgangsöffnung (8) in der Felge (6) hindurch erstreckt,
das erste Koppelelement (23) ein zu dem Achsstummel (1) konzentrisches Gewindesegment trägt und
ein zweites Koppelelement (12) mit einem dem Gewindesegment komplementären Gewinde vorgesehen ist, das zum die Bremsscheibe (3) an der Felge (6) befestigenden Verschrauben mit dem freien Ende des ersten Koppelelements (23) ausgelegt ist.

9. Anordnung nach Anspruch 8, dadurch gekennzeichnet, daß das erste Koppelelement (23) von einem einstückig mit der Bremsscheibe (3) ausgeführten Koppelansatz gebildet ist.

10. Anordnung nach einem der Ansprüche 6 bis 9, dadurch gekennzeichnet, daß das Gewinde des zweiten Koppelelements (12) in aufgeschraubtem Zustand an drei Punkten mit einem oder mehreren Gewindesegmenten in Kontakt steht, das bzw. die auf einem Kreis um den Achsstummel (1) einen Winkel von mehr als 18O° einschließt/einschließen.

11. Anordnung nach einem der vorangehenden Ansprüche, gekennzeichnet durch mindestens eine Schraube (25) zum Befestigen der Felge (6) an der Bremsscheibe (3) bzw. der Bremsscheibe (3) an der Felge (6).

12. Anordnung nach Anspruch 11, gekennzeichnet durch einen Flanschdeckel (26) zwischen dem Kopf der Schraube (25) und der Bremsscheibe (3) bzw. der Felge (6).
